# EUROPEAN PATENT APPLICATION

(11) **EP 0 699 389 A2**
(43) Date of publication of application: **06.03.1996**
(21) Application number: 95305979.7
(22) Date of filing: 25.08.1995
(51) Int. Cl.: A01N 25/10

(54) **Dry pesticidal composition**

(30) Priority: 26.08.1994 JP 201973/94
(71) Applicant: SUMITOMO CHEMICAL COMPANY, LIMITED, Osaka (JP)
(72) Inventor: Takebayashi, Yoshihiro, Toyonaka-shi, Osaka-fu (JP); Matsunaga, Tadahiro, Kobe-shi, Hyogo-ken (JP)
(74) Representative: Cresswell, Thomas Anthony

(57) **Abstract**

This invention relates to a dry pesticidal composition containing an active ingredient for controlling pests, a surfactant, a modified starch, a carbonate and a solid acid, wherein said constituents of said composition are combined together by means of a water-soluble polymer which is soluble in a volatile solvent. The composition has sufficient hardness and high solubility in water.

## Description

The present invention relates to dry pesticidal compositions.

In consideration of the environmental protection, water-based formulations containing no organic solvent are increasingly used for controlling pests, especially in public health.

It is desired to solidify these water-based formulations for the convenience of carriage. Conventional dry formulations, however, have a problem of the insufficient hardness and/or the low solubility in water.

The present invention is directed to a dry pesticidal composition for controlling pests (hereinafter referred to as the composition of the invention). The composition of the invention contains an active ingredient for controlling pests, a surfactant, a modified starch, a carbonate, and a solid acid, wherein the constituents of the composition are combined together by means of a water-soluble polymer which is soluble in a volatile solvent. The composition of the invention is rapidly dissolved or dispersed in water to yield a water-based formulation.

Typical examples of the active ingredient for controlling pests in the composition of the invention include pyrethroids, organophosphorous compounds, carbamates, and insect growth regulators. Typical examples of the active ingredient are given below:
(1) 3-phenoxybenzyl chrysanthemate
(2) 3-phenoxybenzyl (1R)-chrysanthemate
(3) 3-allyl-2-methyl-4-oxocyclopent-2-enyl chrysanthemate
(4) 3-allyl-2-methyl-4-oxocyclopent-2-enyl (1R)-chrysanthemate
(5) 3-allyl-2-methyl-4-oxocyclopent-2-enyl (1R, trans)-chrysanthemate
(6) (S)-3-allyl-2-methyl-4-oxocyclopent-2-enyl (1R,trans)-chrysanthemate
(7) (S)-2-methyl-4-oxo-3-(2-propynyl)cyclopent-2-enyl (1R)-chrysanthemate
(8) 3-allyl-2-methyl-4-oxocyclopent-2-enyl 2,2,3,3-tetramethylcyclopropanecarboxylate
(9) 1-ethynyl-2-methyl-2-pentenyl (1R)-chrysanthemate
(10) 5-benzyl-3-furylmethyl chrysanthemate
(11) 5-benzyl-3-furylmethyl (1R)-chrysanthemate
(12) α-cyano-3-phenoxybenzyl 2-(4-chlorophenyl)-3-methylbutyrate
(13) (S)-α-(cyano-3-phenoxybenzyl (S)-2-(4-chlorophenyl)-3-methylbutyrate
(14) α-cyano-3-phenoxybenzyl 2,2,3,3-tetramethylcyclopropane carboxylate
(15) 3-phenoxybenzyl 3-(2,2-dichlorovinyl)-2,2-dimethylcyclopropanecarboxylate
(16) α-cyano-3-phenoxybenzyl 3-(2,2-dichlorovinyl)-2,2-dimethylcyclopropanecarboxylate
(17) α-cyano-4-fluoro-3-phenoxybenzyl 3-(2,2-dichlorovinyl)-2,2-dimethylcyclopropanecarboxylate
(18) α-cyano-3-phenoxybenzyl chrysanthemate
(19) α-cyano-3-phenoxybenzyl (1R)-chrysanthemate
(20) α-cyano-3-phenoxybenzyl 2-(4-difluoromethoxyphenyl)-3-methylbutyrate
(21) α-cyano-3-phenoxybenzyl (S)-2-(4-difluoromethoxyphenyl)-3-methylbutyrate
(22) α-cyano-3-phenoxybenzyl 2,2-dimethyl-3-(1,2,2,2-tetrabromoethyl)cyclopropanecarboxylate
(23) α-cyano-3-phenoxybenzyl 2,2-dimethyl-3-(2-chloro-2-trifluoromethylvinyl)cyclopropanecarboxylate
(24) 2-(4-ethoxyphenyl)-2-methylpropyl 3-phenoxybenzyl ether
(25) 2-methyl-3-phenylbenzyl (1R,trans)-2,2-dimethyl-3-(2-chloro-2-trifluoromethylvinyl)cyclopropanecarboxylate
(26) 3,4,5,6-tetrahydrophthalimidomethyl chrysanthemate
(27) 3,4,5,6-tetrahydrophthalimidomethyl (1R)-chrysanthemate
(28) (S)-α-cyano-3-phenoxybenzyl (1R,cis)-3-(2,2-dibromovinyl)-2,2-dimethylcyclopropanecarboxylate
(29) 2,3,5,6-tetrafluorobenzyl 3-(2,2-dichlorovinyl)-2,2-dimethylcyclopropanecarboxylate
(30) 2,3,5,6-tetrafluorobenzyl (1R,trans)-3-(2,2-dichloro vinyl)-2,2-dimethylcyclopropanecarboxylate
(31) O,O-dimethyl O-(3-methyl-4-nitrophenyl) phosphorothioate
(32) O,O-dimethyl S-[1,2-di(ethoxycarbonyl)ethyl] phosphorodithioate
(33) O,O-dimethyl O-(4-cyanophenyl) phosphorothioate
(34) O,O-dimethyl S-(α-ethoxycarbonylbenzyl) phosphorodithioate
(35) O,O-diethyl O-(2-isopropyl-4-methyl-6-pyrimidinyl) phosphorothioate
(36) O,O-dimethyl O-[3-methyl-4-(methylthio)phenyl] phosphorothioate
(37) O-(4-bromo-2,5-dichlorophenyl) O,O-diethyl phosphorothioate
(38) 2-methoxy-4H-1,3,2-benzoxaphosphorin-2-sulfide
(39) O,O-dimethyl O-(2,4,5-trichlorophenyl) phosphorothioate
(40) O,O-diethyl O-(3,5,6-trichloro-2-pyridyl) phosphorothioate
(41) O,O-dimethyl O-(3,5,6-trichloro-2-pyridyl) phosphorothioate
(42) O,O-dimethyl 0-(4-bromo-2,5-dichlorophenyl) phosphorothioate
(43) dimethyl 2,2-dichlorovinylphosphate
(44) O,S-dimethyl N-acetylphosphoroamidothioate
(45) O-(2,4-dichlorophenyl) O-ethyl S-propyl phosphorodithioate
(46) O,O-dimethyl S-(5-methoxy-1,3,4-thiadiazolin-2-on-3-ylmethyl) phosphorodithioate
(47) dimethyl 2,2,2-trichloro-1-hydroxyethylphosphonate
(48) O-ethyl O-(4-nitrophenyl) benzenephosphonothioate
(49) O,O-dimethyl S-(N-methylcarbamoylmethyl) phosphorodithioate
(50) 2-sec-butylphenyl N-methylcarbamate
(51) 3-methylphenyl N-methylcarbamate
(52) 3,4-dimethylphenyl N-methylcarbamate
(53) 2-isopropoxyphenyl N-methylcarbamate
(54) 1-naphthyl N-methylcarbamate
(55) 2-isopropylphenyl N-methylcarbamate
(56) 2,3-dihydro-2,2-dimethyl-7-benzofuranyl N-dibutylaminothio-N-methylcarbamate
(57) 5-methoxy-3-(2-methoxyphenyl)-1,3,4-oxadiazol-2(3H)-one
(58) 1-[3,5-dichloro-4-(3-chloro-5-trifluoromethyl-2-pyridyloxy)phenyl]-3-(2,6-difluorobenzoyl)urea
(59) 1-(3,5-dichloro-2,4-difluorophenyl)-3-(2,6-difluorobenzoyl)urea
(60) 1-[3,5-dichloro-4-(1,1,2,2-tetrafluoroethoxy)phenyl]-3-(2,6-difluorobenzoyl)urea
(61) ethyl 2-(4-phenoxyphenoxy)ethylcarbamate
(62) 1-[4-(2-chloro-4-trifluoromethylphenoxy)-2-fluorophenyl]-3-(2,6-difluorobenzoyl)urea
(63) 3,7,9,13-tetramethyl-5,11-dioxa-2,8,14-trithia-4,7,9,12-tetraazapentadeca-3,12-diene-6,10-dione
(64) 1-(4-chlorophenyl)-3-(2,6-difluorobenzoyl)urea
(65) isopropyl (2E,4E)-11-methoxy-3,7,11-trimethyl-2,4-dodecadienoate
(66) ethyl (2E,4E)-3,7,11-trimethyl-2,4-dodecadienoate
(67) 2-tert-butylimino-3-isopropyl-5-phenyl-3,4,5,6-tetrahydro-2H-1,3,5-thiadiazin-4-one
(68) 4-phenoxyphenyl 2-(2-pyridyloxy)propyl ether
(69) 2-phenoxy-6-(neopentyloxymethyl)pyridine
(70) N-cyclohexyl-1,3,5-triazine-2,4,6-triamine

The composition of the invention may include one active ingredient or a combination of two or more active ingredients. The mixing ratio of the combination is selected arbitrarily. The content of the active ingredient may be determined according to the type of the active ingredient, but is generally 0.01 to 50 % by weight, preferably 0.1 to 30 % by weight based on the total weight of the composition of the invention.

The surfactant used in the invention can emulsify and/or disperse the active ingredient and the other constituents of the composition. Typical examples of the surfactant include anionic surfactants such as alkyl arylsulfonates, alkyl naphthalenesulfonates, lignin sulfonates, dialkyl sulfosuccinates, polyoxyethylenealkylaryl ether sulfates, alkali metal salts of copolymers having carboxyl group, and esters of fatty acids, and nonionic surfactants such as polyoxyethylene alkyl ethers, polyoxyethylene alkyl phenyl ethers, polyoxyethylene styrylphenyl ethers, polyoxyethylene alkyl esters, sorbitan alkyl esters, and polyoxyethylene sorbitan alkyl esters. A cationic surfactant or amphoteric surfactant may also be applicable according to the requirements. The composition of the invention may include one surfactant or a combination of two or more surfactants. The content of the surfactant is generally 0.1 to 60% by weight, preferably 1 to 50% by weight based on the total weight of the composition of the invention.

Examples of the modified starch applicable to the invention include α-starch, dextrin, degradation products of starch, starch oxides, and starch derivatives. Commercially available modified starches, for example, PINEFLOW (Matsutani Chemical Corporation) may be used as received. The content of the modified starch is generally 10 to 80% by weight, preferably 20 to 70% by weight based on the total weight of the composition of the invention.

The carbonate is preferably an alkali metal, alkaline earth metal or ammonium carbonate, hydrogencarbonate or sesquicarbonate. Typical examples of the carbonate applicable to the invention include sodium carbonate, potassium carbonate, lithium carbonate, ammonium carbonate, calcium carbonate, sodium hydrogencarbonate, potassium hydrogencarbonate, lithium hydrogencarbonate, ammonium hydrogencarbonate, sodium sesquicarbonate, potassium sesquicarbonate, and ammonium sesquicarbonate. Sodium carbonate, potassium carbonate, sodium hydrogencarbonate, and potassium hydrogencarbonate are especially preferable. The carbonate preferably contains at least 50% by weight, preferably at least 70% by weight of particles having a diameter of 74 to 2,000 µm. In order to improve the homogeneity of mixing, the carbonate preferably contains 5% or less by weight, more preferably 3% or less by weight, of particles having a diameter of 1,000 µm or greater. The composition of the invention may include only one carbonate or a combination of two or more carbonates mixed at an arbitrary ratio.

Examples of the solid acid applicable to the composition of the invention include citric acid, succinic acid, maleic acid, fumaric acid, tartaric acid, oxalic acid, malonic acid, malic acid, adipic acid, boric acid, sodium dihydrogenphosphate, potassium dihydrogenphosphate, benzoic acid, sulfamic acid, salicylic acid, ascorbic acid, glutamic acid, aspartic acid, sorbic acid, nicotinic acid, and phenylacetic acid. Maleic acid, fumaric acid, citric acid, succinic acid, malic acid, and tartaric acid are preferable. The composition of the invention may include only one solid acid or a combination of two or more solid acids mixed at an arbitrary ratio.

The total content of the carbonate and the solid acid is generally 0.1 to 70% by weight, preferably 10 to 40% by weight based on the total weight of the composition of the invention. The weight ratio of the carbonate to the solid acid is generally 1:5 to 5:1, preferably 1:3 to 3:1. The carbonate and solid acid are preferably present in the composition of the invention in about equivalent amounts.

The water-soluble polymer which is soluble in a volatile solvent, used in the invention, is preferably soluble at a concentration of at least 0.1% by weight, more preferably at least 1% by weight, and is most preferably highly soluble, in a non-aqueous solvent having a boiling point of 100°C or less. Examples of the applicable water-soluble polymers include hydroxypropyl cellulose, polyvinyl pyrrolidone, methyl cellulose, and hydroxypropyl methyl cellulose. Polyvinyl pyrrolidone is preferable since it gives both the sufficient hardness and the high water solubility to the composition of the invention.

The content of the water-soluble polymer is generally 0.1 to 20% by weight, preferably 1 to 15% by weight based on the total weight of the composition of the invention.

The composition of the invention is prepared, for example, by mixing the active ingredient, the surfactant, the modified starch, the carbonate, the solid acid, the water-soluble polymer which is highly soluble in a volatile solvent, and the volatile solvent (for example, methanol, ethanol, isopropyl alcohol, tert-butanol, acetone, chloroform, or methylene chloride) and evaporating the volatile solvent. The volatile solvent is preferably a non-aqueous solvent having a boiling point of 100°C or less. Another solvent in which the active ingredient is dissolved, silica, a mineral carrier, an antiseptic, and a stabilizer may also be added according to the requirements.

The composition of the invention may be manufactured in the shape of blocks, granules, tablets and the like.

Although the invention is further described in detail based on the following examples, these examples are only illustrative and not restrictive in any sense. In the description below, the term 'parts' represents 'parts by weight'.

### Example 1

Three parts of d-allethrin (3-allyl-2-methyl-4-oxocyclopent-2-enyl (1R)-chrysanthemate), 3 parts of d-phenothrin (3-phenoxybenzyl (1R)-chrysanthemate), 0.6 parts of BHT (antiseptic), and 25 parts of Himal 1119 (surfactant manufactured by MATSUMOTO YUSHI-SEIYAKU CO.,LTD.) were mixed under mild-heating to yield a homogeneous solution. After addition of 9 parts of polyvinyl pyrrolidone, the mixture was dissolved in 24 parts of an acetone/ethanol mixed solution (v/v=1/1).

On the other hand, thirty two parts of PINEFLOW (modified starch manufactured by Matsutani Chemical Corporation), 13 parts of sodium carbonate, and 14.4 parts of succinic acid were mixed with a blender, to which the solution prepared above was added. The obtained mixture was put in a cylindrical vessel having the diameter of approximately 5 cm, allowed to stand still, and dried under reduced pressure to yield the composition of the invention.

### Example 2

A mixture including 1.5 parts of prallethrin ((S)-2-methyl-4-oxo-3-(2-propynyl)cyclopent-2-enyl (1R)-chrysanthemate), 3 parts of cyphenothrin (α-cyano-3-phenoxybenzyl (1R)-chrysanthemate), 0.5 parts of BHT (antiseptic), and 17 parts of Himal 1187 (surfactant manufactured by MATSUMOTO YUSHI-SEIYAKU CO.,LTD.) was blended well under mild-heating to yield a homogeneous solution. After addition of 7 parts of polyvinyl pyrrolidone, the mixture was dissolved in 20 parts of the acetone/ethanol mixed solution (v/v=1/1).

On the other hand, fifty two parts of PINEFLOW (modified starch manufactured by Matsutani Chemical Corporation), 9 parts of sodium carbonate, and 10 parts of succinic acid were mixed with a blender, to which the solution prepared above was added. The obtained mixture was put in a cylindrical vessel having the diameter of approximately 7 cm, allowed to stand still, and dried under reduced pressure to yield the composition of the invention.

### Example 3

A mixture including 2.2 parts of d-allethrin, 2.2 parts of d-phenothrin, 0.4 part of BHT (antiseptic), and 17.6 parts of Himal 1119 (surfactant manufactured by MATSUMOTO YUSHI-SEIYAKU CO.,LTD.) was blended well under mild-heating to yield a homogeneous solution. After addition of 6.2 parts of polyvinyl pyrrolidone, the mixture was dissolved in 30 parts of the acetone/ethanol mixed solution (v/v=1/1).

On the other hand, 53.6 parts of PINEFLOW(modified starch manufactured by Matsutani Chemical Corporation), 8.9 parts of sodium carbonate, and 8.9 parts of succinic acid were blended well with a mixer, to which the solution prepared above was added. The obtained mixture was put in a cylindrical vessel having the diameter of approximately 5 cm and dried at room temperature and subsequently under reduced pressure to yield the composition of the invention as tablet.

The tablet of the invention thus obtained in Example 3 was shaken in water to prepare an aqueous solution containing 0.2% (w/v) of d-allethrin and 0.2% (w/v) of d-phenothrin. The tablet was completely dissolved in water after seven minutes.

### Example 4

A mixture including 2.0 parts of d-allethrin, 2.0 parts of d-phenothrin, 0.4 parts of BHT (antiseptic), and 15.8 parts of Himal 1119 (surfactant manufactured by MATSUMOTO YUSHI-SEIYAKU CO.,LTD) was blended well under mild-heating to yield a homogeneous solution. After addition of 5.6 parts of polyvinyl pyrrolidone, the mixture was dissolved in 30 parts of the acetone/ethanol mixed solution (v/v=1/1).

On the other hand, 48.4 parts of PINEFLOW(modified starch manufactured by Matsutani Chemical Corporation), 12.9 parts of sodium carbonate, and 12.9 parts of succinic acid were blended well with a mixer, to which the soution prepared above was added. The obtained mixture was put in a cylindrical vessel having the diameter of approximately 5 cm, allowed to stand still, and dried under reduced pressure to yield the composition of the invention as tablet.

The tablet of the invention thus obtained in Example 4 was shaken in water to prepare an aqueous solution containing 0.2% (w/v) of d-allethrin and 0.2% (w/v) of d-phenothrin. The tablet was completely dissolved in water after seven minutes.

All the tablet compositions of the invention obtained in Examples 1 through 4 had sufficient hardness and preferably dried surface as well as excellent water solubility, thereby having high value of commodity.

The tablet of the invention obtained in Example 3 was dissolved in water to prepare an aqueous solution containing 0.1% (w/v) of d-allethrin and 0.1% (w/v) of d-phenothrin. The aqueous solution was directly sprayed onto six American cockroaches to result in the fatal rate of 100%.

Polyethylene glycol (PEG2000) which is a water-soluble polymer and solid at ordinary temperature, was added in place of the modified starch in Examples 3 and 4 to prepare comparative compositions. Each comparative composition was shaken in water to prepare an aqueous solution containing 0.2% (w/v) of d-allethrin and 0.2% (w/v) of d-phenothrin. It took more than 30 minutes to completely dissolve the comparative compositions in water.

On the other hand, comparative tablets were prepared by simply mixing the constituents of Examples 3 and 4 respectively (the same component as Examples 3 and 4 but not combined by means of the water-soluble polymer). The comparative tablets had insufficient hardness. Each comparative tablet was shaken in water to prepare an aqueous solution containing 0.2% (w/v) of d-allethrin and 0.2% (w/v) of d-phenothrin. It took more than 30 minutes to completely dissolve the comparative tablets in water.

## Claims

1. A dry pesticidal composition comprising an active ingredient for controlling pests, a surfactant, a modified starch, a carbonate, and a solid acid, wherein said constituents of said composition are combined together by means of a water-soluble polymer which is soluble in a volatile solvent.

2. A composition according to claim 1, wherein the weight percentage of the active ingredient is within the range of 0.01 to 50%, the weight percentage of the surfactant is within the range of 0.1 to 60%, the weight percentage of the modified starch is within the range of 10 to 80%, the total weight percentage of the carbonate and the solid acid is within the range of 0.1 to 70%, the weight ratio of the carbonate to the solid acid is within the range of 1:5 to 5:1, and the weight percentage of the water-soluble polymer is within the range of 0.1 to 20%.

3. A composition according to claim 1, wherein the weight percentage of the active ingredient is within the range of 0.1 to 30%, the weight percentage of the surfactant is within the range of 1 to 50%, the weight percentage of the modified starch is within the range of 20 to 70%, the total weight percentage of the carbonate and the solid acid is within the range of 10 to 40%, the weight ratio of the carbonate to the solid acid is within the range of 1:3 to 3:1, and the weight percentage of the water-soluble polymer is within the range of 1 to 15%.

4. A composition according to any one of claims 1 to 3, wherein the water-soluble polymer comprises hydroxypropyl cellulose, polyvinyl pyrrolidone, methyl cellulose or hydroxypropyl methyl cellulose.

5. A composition according to any one of claims 1 to 3, wherein the water-soluble polymer comprises polyvinyl pyrrolidone.

6. A process for the preparation of a composition according to any one of the preceding claims, which process comprises mixing an active ingredient for controlling pests, a surfactant, a modified starch, a carbonate, a solid acid, a water-soluble polymer which is soluble in a volatile solvent, and said volatile solvent, and evaporating the volatile solvent.

7. A method of controlling pests at a locus which comprises applying to the locus a composition according to any one of claims 1 to 5.
